# EUROPEAN PATENT APPLICATION

(11) **EP 3 403 796 A1**
(43) Date of publication of application: **21.11.2018**
(21) Application number: 18172670.4
(22) Date of filing: 16.05.2018
(51) Int. Cl.: B27M 1/08, B23Q 11/00, F16P 1/02, F16P 3/14, F16P 3/12

(54) **A MACHINE TO PROCESS WOODEN COMPONENTS OR THE LIKE**

(30) Priority: 16.05.2017 IT 201700052888
(71) Applicant: BIESSE S.p.A., 61100 Pesaro (IT)
(72) Inventor: ANDREATINI, Davide, 61121 PESARO (PU) (IT); CARROTTA, Alberto, 61100 PESARO (PU) (IT); TOSCANO, Giuseppe, 61100 PESARO (PU) (IT)
(74) Representative: Manconi, Stefano

(57) **Abstract**

A machine to process components (2) of wood or the like has a base (3), an overhead crane (19) movable along the base (3), and a protection barrier (10), which extends around a rear face (6) and two side faces (8) of the base (3), and projects from a front face (5) of the base (3), so as to laterally limit an access zone (13) to the base (3); the access zone (13) having a central area (14), arranged between two side areas (15, 16), each of which is associated with a relative control device (26), adapted to detect the access of an operator in the side area (15, 16). Main figure: 1

## Description

### PRIORITY CLAIM

This application claims priority from Italian Patent Application No. 102017000052888 filed on May 16, 2017.

The present invention relates to a machine to process components of wood or the like.

In the field of processing components of wood or the like, it is known to provide a machine comprising a base, which extends in a first direction, and has a front face and a rear face, opposite each other, and two side faces, opposite each other; and an overhead crane, which extends above the base in a second direction, transverse to the first direction, provided with an operating head to process the components.

The overhead crane is movable along the base in the first direction, between two operating stations, each of which is provided with at least one gripping device to hold at least one component, and alternatively defines a transfer station to transfer the components to/from the relative gripping device and a processing station to process the components by means of the operating head.

The machine is surrounded by a protection barrier, which extends around the rear face and the side faces of the base, and projects from the front face of the base, in the second direction, so as to laterally limit, in the first direction, an access zone to the base.

The access zone is surveyed by at least two video cameras, fitted inside the protection barrier, which are arranged at the sides of the access zone, facing each other in the first direction to capture respective images of at least part of the access zone.

The access zone comprises a central area and two side areas, arranged on opposite sides of the central area.

Each video camera is able to correctly capture the images of the central area, it is unable to capture images of the side area adjacent thereto, and it is able to capture images of the side area adjacent to the other video camera.

As the images captured by each video camera of the side area adjacent to the other video camera have a relatively reduced reliability, known machines for processing components of wood or the like, of the type described above, have various drawbacks principally deriving from the fact that the protection barrier and the two video cameras are unable to control access by staff to the two side areas and thus guarantee an adequate level of safety of the machines.

It is an object of the present invention to provide a machine to process components of wood or the like, which is without the previously described drawbacks and which is cheap and easy to use.

According to the present invention, there is provided a machine to process components of wood or the like, as claimed in the appended claims.

The present invention will now be described with reference to the appended drawings, which illustrate a nonlimiting embodiment thereof, wherein:
Figure 1 is a schematic perspective view, with parts removed for clarity, of a preferred embodiment of the machine to process components of wood or the like of the present invention; and
Figures 2 and 3 are two schematic plan views, with parts removed for clarity, of the machine in figure 1 illustrated in two different operating positions.

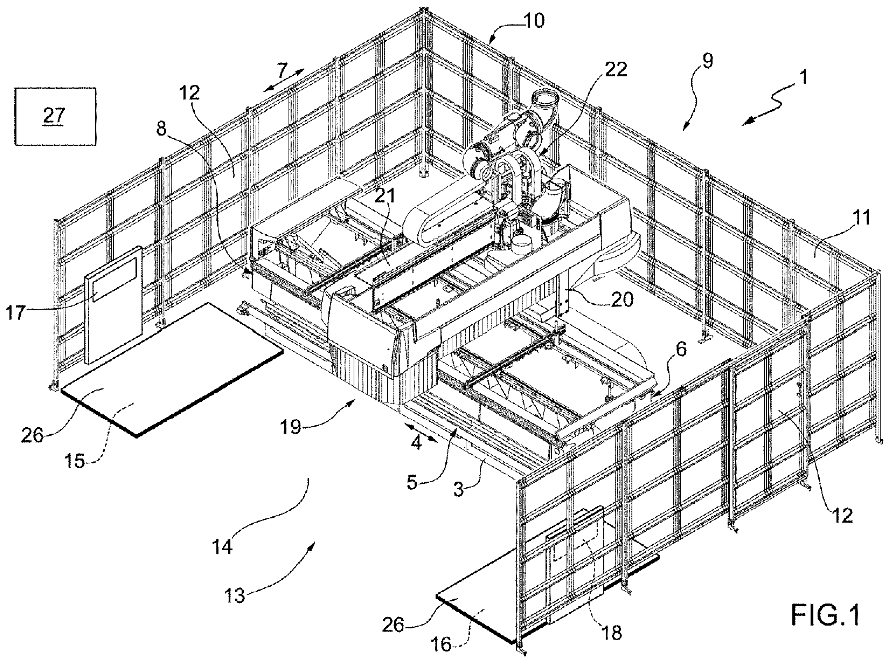

With reference to figures 1, 2, and 3, number 1 indicates, as a whole, a machine to process components of wood or the like defined, in this case, by panels 2 with a substantially flat and rectangular shape.

The machine 1 comprises an elongated base 3, which extends in a horizontal direction 4, it is limited by a front face 5 and a rear face 6, substantially parallel to each other and perpendicular to a horizontal direction 7, transverse to the direction 4, and it is further limited by two side faces 8, substantially parallel to each other and perpendicular to the faces 5, 6 and to the direction 4.

Access to the machine 1 is controlled by a security system 9 comprising a protection barrier 10 comprising, in turn, a rear wall 11 extending along the rear face 6, parallel to the face 6, and two side walls 12 extending along the side faces 8 parallel to the faces 8.

The two walls 12 project from the base 3 in the direction 7 so as to laterally limit, in the direction 4, an access zone 13 to the base 3.

The zone 13 comprises a central area 14 and two side areas 15, 16, which are obtained on opposite sides of the central area 14 in the direction 4, and each extend between the central area 14 and a relative wall 12.

The system 9 further comprises, in this case, two video cameras 17, 18, fitted inside the barrier 10 and at the sides of the zone 13, which are arranged in the side areas 15 and 16, respectively, facing each other in the direction 4 to capture images of the zone 13.

According to a non-illustrated variation, the two video cameras 17, 18 are each eliminated and replaced with a respective video camera unit.

As regards the above, it should be specified that the technical features of the video cameras 17, 18 are such whereby:
each video camera 17, 18 is able to correctly capture the images of the central area 14;
each video camera 17, 18 is unable to capture the images of the side area 15, 16 adjacent thereto;
the video camera 17 is able to capture images of the side area 16 with relatively reduced reliability; and
the video camera 18 is able to capture images of the side area 15 with relatively reduced reliability.

The machine 1 further comprises an overhead crane 19 comprising, in turn, a vertical column 20 coupled, in a known manner, to the base 3 to make rectilinear movements in the direction 4 along the base 3 and under the thrust of an actuating device, known and not illustrated.

The column 20 has, connected to a free end thereof, a horizontal cross rod 21, which extends above the base 3 in the direction 7, and supports an operating head 22 of a known type coupled, in a known manner, to the cross rod 21 to make rectilinear movements in the direction 7 along the cross rod 21.

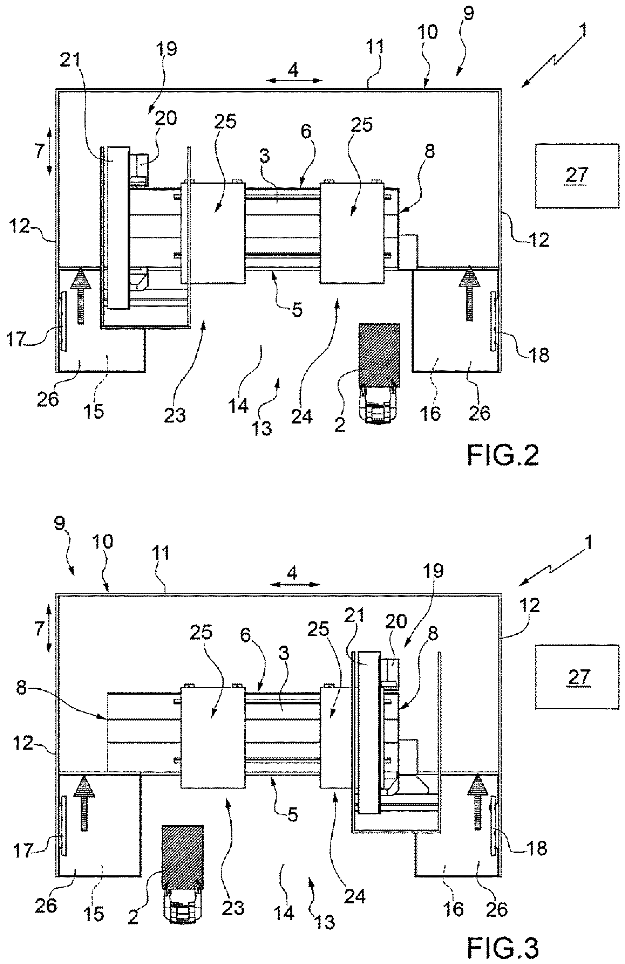

The overhead crane 19 projects inside the central area 14 in the direction 7 and is movable along the base 3 in the direction 4 between two end operating positions (figures 2 and 3), in each of which the overhead crane 19 projects inside a relative side area 15, 16.

Furthermore, the machine 1 has two operating stations 23, 24, which are obtained on the base 3, and comprise respective support planes 25 configured to each hold at least one respective panel 2.

Alternatively, each station 23, 24 defines a transfer station to transfer the panels 2 to/from the relative plane 25 and a processing station to process the panels 2 by means of the head 22.

In other words, when the overhead crane 19 and the head 22 are arranged in the station 23 (figure 2), the station 23 defines a station to process the panels 2, and the station 24 defines a station to load/unload the panels 2 to/from the relative support plane 25, whereas, when the overhead crane 19 and the head 22 are arranged in the station 24 (figure 3), the station 24 defines a station to process the panels 2, and the station 23 defines a station to load/unload the panels 2 to/from the relative support plane 25.

According to a non-illustrated variation, the barrier 10 further comprises two auxiliary walls, each of which is fitted between a relative side face 8 of the base 3 and a relative side wall 12 of the barrier 10, so as to limit access by staff exclusively to the zone 13.

Preferably, but not necessarily, the abovementioned auxiliary walls are shaped like openable gates so as to allow operator to access spaces comprised between the base 3 and the barrier 10, different from the zone 13, in given machine 1 operating conditions.

Access by operator to each side area 15, 16 is detected by a control device comprising, in this case, a pressure-sensitive safety carpet 26 fitted on the side area 15, 16.

The safety carpets 26 are connected to an electronic control unit 27 connected, in turn, to the video cameras 17, 18 to selectively control the operation of the overhead crane 19 and/or operating head 22 based on a signal from the safety carpets 26 and/or from the video cameras 17, 18.

As the video cameras 17, 18 are correctly able to capture the images of the central area 14, the machine 1 has various advantages principally deriving from the fact that the safety carpets 26, detecting access by operator in the side areas 15, 16, allow the security system 9 to correctly detect access by an operator in the whole access zone 13, in other words, both in the central area 14 and the side areas 15, 16, and thus control the slowing down and/or stopping of the overhead crane 19 in the direction 4 and/or the operating head 22 in the direction 7, based on a signal from the safety carpets 26 and/or from the video cameras 17, 18.

According to a non-illustrated variation, the safety carpets 26 are eliminated and replaced, each with a respective optical or thermal or ultrasound device fitted at the entry of a relative side area 15, 16 to detect the access of staff to the side area 15, 16.

## Claims

1. A machine to process components (2) of wood or the like comprising a base (3), which extends in a first direction (4), is provided with at least one gripping device (25), to hold at least one component (2) and has a front face (5) and a rear face (6), opposite each other and two side faces (8), opposite each other; an overhead crane (19), which extends above the base (3) in a second direction (7), transverse to the first direction (4), is provided with an operating head (22) to process components (2), and is movable along the base (3) in the first direction (4); a protection barrier (10), which extends around the rear face (6) and the side faces (8) of the base (3), and projects from the front face (5) of the base (3) in the second direction (7), so as to laterally limit, in the first direction (4), an access zone (13) to the base (3); at least two video cameras (17, 18), arranged at the sides of the access zone (13), facing each other, in the first direction (4), to capture respective images of at least part of the access zone (13); the access zone (13) comprising a central area (14) and two side areas (15, 16) arranged on opposite sides of the central area (14), in the first direction (4); and **characterized in that** it further comprises a respective control device (26) for each side area (15,16), to detect the access of an operator in the side area (15, 16).

2. The machine according to claim 1 and further comprising an electronic control unit (27) to selectively control the operation of the overhead crane (19) and/or the operating head (22), based on a signal from the control devices (26) and/or from the video cameras (17, 18).

3. The machine according to claim 2, wherein each control device (26) comprises a pressure-sensitive safety carpet arranged on the relative side area (15, 16); the electronic control unit (27) being connected to the safety carpets and to the video cameras (17, 18) to control the slowing down and/or the stopping of the overhead crane (19) in the first direction (4), and/or of the operating head (22) in the second direction (7), based on the signals from the safety carpets and/or from the video cameras (17, 18).

4. The machine according to claim 2, wherein each control device (26) comprises an optical or thermal or ultrasound device fitted at the entry of the relative side area (14, 15); the electronic control unit (27) being connected to the optical or thermal or ultrasound device and to the video cameras (17, 18) to control the slowing down and/or the stopping of the overhead crane (19) in the first direction (4), and/or of the operating head (22) in the second direction (7), based on the signals from the optical or thermal or ultrasound devices and/or from the video cameras (17, 18).

5. The machine according to any one of the preceding claims, wherein the protection barrier (10) comprises a rear wall (11) extending along the rear face (6), and two side walls (12) extending along the side faces (8).

6. The machine according to claim 5, wherein the two side walls (12) of the protection barrier (10) are arranged at a distance from each other, which is greater than a length of the base (3) in the first direction (4).

7. The machine according to claim 5 or 6, also comprising two further protection barriers, each of which is fitted between a relative side face (8) of the base (3) and a relative side wall (12) of the protection barrier (10) to keep staff inside the access zone (13).

8. The machine according to any one of the preceding claims, wherein the overhead crane (19) projects from the base (3) inside the central area (14), in the second direction (7).

9. The machine according to any one of the preceding claims, wherein the overhead crane (19) is movable along the base (3), between two end operating positions, in each of which the overhead crane (19) projects inside a relative side area (15, 16).

10. The machine according to any one of the preceding claims and also comprising two operating stations (23, 24), each of which is provided with at least one said gripping device (25), and alternatively defines a transfer station to transfer the components (2) to/from the gripping device (25), and a processing station to process the components (2) by means of the operating head (22); the overhead crane (19) being movable along the base (3) between the two operating stations (23, 24).
